# NEW EUROPEAN PATENT SPECIFICATION

(11) **EP 1 401 295 B2**
(45) Date of publication and mention of the opposition decision: **26.09.2018**
(45) Mention of the grant of the patent: 16.05.2007
(21) Application number: 02750984.3
(22) Date of filing: 27.05.2002
(51) Int. Cl.: A23L 33/10

(54) **HARD BOUILLON TABLET**
TABLETTENFÖRMIGE BRÜHE
BOUILLON CUBE DUR

(30) Priority: 20.06.2001 EP 01202380; 10.09.2001 EP 01203393
(43) Date of publication of application: 31.03.2004
(73) Proprietor: Nestec S.A., 1800 Vevey (CH)
(72) Inventor: PALZER, Stefan, CH-8320 Fehraltorf (CH); ENGGIST, Alfred, CH-8302 Kloten (CH); HARRIS, Brenda, P., CH-8422 Pfungen (CH); SOLTERMANN, Patrick, CH-8500 Fraunfeld (CH); SCHMUTZ, Walter, CH-8604 Volketswil (CH)
(74) Representative: Elleby, Gudrun
(86) International application number: PCT/EP2002/005831
(87) International publication number: WO 2003/003858

(56) References cited:
- EP-A- 0 021 483
- EP-A- 0 764 407
- EP-A- 0 780 058
- EP-A- 0 888 723
- WO-A-98/12934
- CA-A1- 2 308 929
- GB-A- 1 470 646

## Description

The present invention relates to a hard bouillon tablet and to a process for the production of a hard bouillon tablet.

A conventional way of manufacturing hard bouillon tablets comprises mixing powdered bouillon components with fat and no or only little amounts of oil, and pressing the mix into tablet form.

Nowadays there is a nutritional trend to avoid or at least reduce consumption of fats rich in trans fatty acids and saturated fatty acids and to preferably consume healthy oils rich in monounsaturated fatty acids and/or polyunsaturated fatty acids such as sunflower, safflower, canola and/or olive oil, for example.

A first object of the present invention is to provide a hard bouillon tablet which only or mainly contains oil, especially a healthy oil rich in monounsaturated fatty acids and/or polyunsaturated fatty acids, and no or only little amounts of fat beside non fat conventional bouillon ingredients.

A second object of the present invention is to provide a hard bouillon tablet which has no or only little fat solidification after rehydratation with hot water when the rehydrated product is getting cold.

A third object of the present invention is to provide a hard bouillon tablet which has an improved cold water solubility.

A fourth object of the present invention is to provide a hard bouillon tablet whith an improved, fresh appearance, especially if it comprises garnishes such as dehydrated vegetables and/or herb leafs, for example.

A fifth object of the present invention is to provide a process for manufacturing such a bouillon tablet.

It has now been found that the first four objects of the present invention can be met by a hard bouillon tablet which comprises, in total tablet weight %, from 1 to 20% of an oil and possibly fat, from 4 to 80% of a milled filler, up to 95% of a non milled filler, from 4 to 35%, preferably from 4 to 20% of a stickening or sticking agent, and, in total oil and fat weight %, up to 40% or preferably up to 30%, even more preferably up to 20% or even up to 10%, and still even more preferably up to only 5% or even up to only 1% fat, as well as optionally spices, flavours, dehydrated vegetables, herb leafs and/or plant extracts; wherein the milled filler is a milled crystalline ingredient having been milled to fine particles having a mean diameter of from 5 to 80 µm; and in which the stickening or sticking agent comprises an ingredient the addition of which (combined with an adequate increase of the Aw value) is capable of imparting a glass transition temperature to the final mixture which may be exceeded during tableting, and which comprises, as stickening or sticking agent, from 10 to 20% maltodextrin having a DE value of from 5 to 60, preferably of from 10 to 60, more preferably of from 20 to 50 and even more preferably of from 10 to 30, and from 0.8 to 1.2% added water;
wherein the total amount of milled filler is up to 80%.

The fifth object of the present invention can be met by a process for the production of a hard bouillon tablet, which consists of preparing a dry premix of powdered constituents comprising, in total tablet weight %, from 4 to 80% of a milled filler and up to 95% of a non milled filler, atomising, in total tablet weight %, from 1 to 20% of an oil and possibly fat onto the dry premix while further mixing, optionally adding dehydrated vegetables and/or herb leafs, and tableting the final mixture thus obtained, wherein, in total tablet weight %, from 4 to 35%, preferably from 4 to 20% of a stickening or sticking agent and optionally spices, flavours, and/or plant extracts are added to the dry premix or to the mixture of dry premix and oil, and wherein, in total oil and fat weight %, up to 40% or preferably up to 30%, even more preferably up to 20% or even up to 10%, and still even more preferably up to only 5% or even up to only 1% fat are added to the dry premix or to the oil; wherein the milled filler is a milled crystalline ingredient having been milled to fine particles having a mean diameter of from 5 to 80 pm; and in which the stickening or sticking agent comprises an ingredient the addition of which (combined with an adequate increase of the Aw value) is capable of imparting a glass transition temperature to the final mixture which may be exceeded during tableting, and which comprises, as stickening or sticking agent, from 10 to 20% maltodextrin having a DE value of from 5 to 60, preferably of from 10 to 60, more preferably of from 20 to 50 and even more preferably of from 10 to 30, and from 0.8 to 1.2% added water;
wherein the total amount of milled filler is up to 80%.

Throughout the present description, the expression "bouillon" is to be understood as meaning "bouillon and/or seasoning".

The expression "hard bouillon tablet" means "tablet obtained by pressing a free flowing bouillon powder into a tablet form".

The expression "oil" means "oil or mixture of oils which is liquid at room temperature and which more especially has a solid fat content (SFC) of less than 5% at 20°C".

The expression "milled filler" means "a powdered filler which has been milled to an especially fine granulometry or which has an especially fine granulometry".

The expression "non milled filler" means "a powdered filler which has not been milled to an especially fine granulometry or which does not have an especially fine granulometry".

Thus, it has surprisingly been found that it is possible to have only or mainly oil and no or only little fat entrapped in a hard bouillon tablet provided the tablet also comprises a milled filler and a stickening or sticking agent.

In this way, it is indeed possible to provide a hard bouillon tablet which only or mainly contains oil, especially a healthy oil rich in monounsaturated fatty acids and/or polyunsaturated fatty acids , and no or only little fat beside non fat conventional bouillon ingredients.

Such a hard bouillon tablet indeed has no or only little fat solidification after rehydratation with hot water when the rehydrated product is getting cold, and indeed has an improved cold water solubility.

In addition, the present hard bouillon tablet surprisingly appears to have an improved, fresher and nicer appearance than that of a traditional hard bouillon tablet, due to what may be called a natural polish of its surfaces as compared with the rather rough or mat surfaces of a traditional hard bouillon tablet.

In the present hard bouillon tablet, the oil may be any suitable food grade oil such as chicken fat, not fractionated palm oil or palm olein, but preferably a healthy oil such as sunflower oil, olive oil, mais oil and/or canola oil, for example.

The fat may be palm fat or palm stearin, for example.

The milled filler is a milled crystalline ingredient such as salt (sodium chloride), glutamate and/or sugar (sucrose), for example.

The milled crystalline ingredient has been milled to fine particles having a mean diameter of from 5 to 80 µm.

The mean diameter is defined as a 50% limit (D50) in particle distribution whereby 50% by volume of the particles have a diameter below the 50% limit and 50% by volume of the particles have a diameter above the 50% limit.

Preferably, these fine particles also have a span of from 2.0 to 5.0.

The span is defined as the broadness or width in particle distribution between a 10% limit (D10) and a 90% limit (D90) divided by the mean particle diameter (D50), whereby 10% by volume of the particles have a diameter below the 10% limit and 10% by volume of the particles have a diameter above the 90% limit.

The so called non milled filler may be a powdered crystalline ingredient such as salt, glutamate and/or sugar which has not been milled to an especially fine granulometry but which comprises particles the mean diameter of which is of from about 100 to about 600 µm, preferably from about 200 to about 600 µm and more preferably from about 300 to about 500 µm, for example.

The stickening or sticking agent comprises an ingredient the addition of which (combined with an adequate increase of the Aw value) is capable of imparting a glass transition temperature to the final mixture which may be relatively easily exceeded during tableting, and which comprises, as stickening or sticking agent, from 10 to 20% maltodextrin and 0.8 to 1.2% added water, the maltodextrin haveing a DE value of from 5 to 60, preferably of from 10 to 60, more preferably of from 20 to 50 and even more preferably of from 10 to 30, and the Aw value of this hard bouillon tablet preferably is of from 0.3 to 0.5.

As stated above, the present process for the production of a hard bouillon tablet consists of preparing a dry premix of powdered constituents comprising, in total tablet weight %, from 4 to 80% of a milled filler and up to 95% of a non milled filler, atomising, in total tablet weight %, from 1 to 20% of an oil and possibly fat onto the dry premix while further mixing, optionally adding dehydrated vegetables and/or herb leafs, and tableting the final mixture thus obtained, wherein, in total tablet weight %, from 4 to 35%, preferably from 4 to 20% of a stickening or sticking agent and optionally spices, flavours, and/or plant extracts are added to the dry premix or to the mixture of dry premix and oil, and wherein, in total oil and fat weight %, to 40% or preferably up to 30%, even more preferably up to 20% or even up to 10%, and still even more preferably up to only 5% or even up to only 1% fat are added to the dry premix or to the oil; wherein the milled filler is a milled crystalline ingredient having been milled to fine particles having a mean diameter of from 5 to 80 pm; and in which the stickening or sticking agent comprises an ingredient the addition of which (combined with an adequate increase of the Aw value) is capable of imparting a glass transition temperature to the final mixture which may be exceeded during tableting, and which comprises, as stickening or sticking agent, from 10 to 20% maltodextrin having a DE value of from 5 to 60, preferably of from 10 to 60, more preferably of from 20 to 50 and even more preferably of from 10 to 30, and from 0.8 to 1.2% added water;
wherein the total amount of milled filler is up to 80%.

Preparing the premix may be carried out by means of any suitable traditional powder mixer such as a horizontal mixer with plough-shaped heads arranged on its horizontal shaft or a ribbon mixer, for example.

The oil is atomised onto the dry premix through any adequate nozzle such as a simple or a binary nozzle, for example. Further mixing preferably is combined with chopping in order to better agglomerate the oil with the milled filler.

The fat may be added either in solid form to the dry premix or in liquefied form to the oil, for example.

As maltodextrin is used as stickening or sticking agent, the added water may be incorporated by emulsification into the oil before atomisation, for example.

Tableting or pressing into a tablet form may be carried out under a pressure of from 10 to 1000 bar (1 to 100 MPa), preferably from 10 to 150 bar (1 to 15 MPa), for example.

A further, special advantage of an embodiment of the present process in which no or only little amounts of fat and only or mainly oil is used is that, in contrast with a conventional process, it is not necessary to ripen the mass which can immediately be tableted. The fat in conventional hard bouillon tablets namely has to be cooled and crystallised either before or after adding the rest of the ingredients.

Embodiments of the hard bouillon tablet and of the process for producing it according to the present invention are illustrated in the following Examples in which the percentages are by weight unless indicated to the contrary.

The Examples are preceded by a short description of the method used for analysing the particle size of the milled filler.

### Method 1: Particle size analysis

The particle size of the milled filler was analysed by means of a laser diffraction particle sizer (MASTERSIZER S, Malvern Instruments Ltd., Malvern/GB), coupled with a fully automated, air pressure controlled dry powder feeder (GMP ultra).

The result from the analysis was the relative distribution of volume of the particles in the range of size classes. Cumulative undersize curves and the following particle size distribution parameters were derived from these basic results:
**D50:** 50% limit = mean particle diameter (50% by volume of the particles had a diameter below D50 and 50% by volume of the particles had a diameter above D50)
**D10:** 10% limit (10% by volume of the particles had a diameter below D10)
**D90:** 90% limit (10% by volume of the particles had a diameter above D90)
**Span:** (D90-D10)/D50

### Example 1

A hard, herb bouillon tablet was produced which had the following composition:
- 47 % milled salt
- 20 % milled monosodium glutamate
- 13 % maltodextrin with a DE value of 50
- 12 % olive oil
- 6.5 % dehydrated powdered aromatics and spices
- 1.4 % water containing plant extract solution (70 % water)
- 0.1 % dried herbs (like thyme or oregano)

The granulometry of the milled salt was as follows:

| | |
|---|---|
| D10: | 8.79 µm |
| D50: | 44.45 µm |
| D90: | 142.54 µm |
| Span: | 3.0 |

The granulometry of the milled glutamate was as follows:

| | |
|---|---|
| D10: | 4.80 µm |
| D50: | 27.27 µm |
| D90: | 101.69 µm |
| Span: | 3.55 |

The production process comprised the following steps:

The plant extract solution was emulsified with the olive oil in a high pressure homogenisator.

The emulsion was atomised on a premix of the powdered ingredients in a ploughshare mixer with chopper.

The dried herbs were added in the end.

The mixture thus obtained was tableted under a pressure of 10-150 bar.

The hard bouillon tablet thus obtained contained only olive oil, which is a healthy oil rich in monounsaturated fatty acids and/or polyunsaturated fatty acids, and no fat beside the non fat ingredients.

This tablet had no fat solidification after rehydratation with hot water when it was then getting cold and it also was cold water soluble.

Furthermore this tablet had a fresh and nice appearance due to what may be called a natural polish of its surfaces.

### Example 2

A hard, vegetable bouillon tablet was produced which had the following composition:
- 44 % milled jodid containing salt
- 20 % milled monosodium glutamate
- 14 % maltodextrin with a DE value of 45
- 12 % sunflower oil
- 6.7 % powdered aromatics and spices (mainly vegetable flavours)
- 2 % dried vegetables
- 1.3 % colouring water based solution of plant extracts (e.g. curcuma)

The respective granulometries of salt and glutamate were as shown in Example 1.

The production process comprised the following steps:

The solution of plant extract was emulsified with the sunflower oil in a high pressure homogeniser.

The emulsion was atomised on a premix of the powdered ingredients in a ploughshare mixer with chopper.

The dried vegetables were added in the end.

The mixture thus obtained was tableted under a pressure of 10-150 bar.

The hard, vegetable bouillon tablet thus obtained contained only sunflower oil, which is a healthy oil rich in monounsaturated fatty acids and/or polyunsaturated fatty acids, and no fat beside the non fat ingredients.

This tablet had no fat solidification after rehydratation with hot water when it was then getting cold and it also was cold water soluble.

Furthermore this tablet had a fresh and nice appearance due to what may be called a natural polish of its surfaces.

### Example 3

A hard, beef-type bouillon tablet was produced which had the following composition:
- 43 % milled salt
- 18 % maltodextrin with a DE value of 30
- 15.8 % powdered aromatics and spices (e.g. meat flavour)
- 11 % sunflower oil
- 9 % monosodium glutamate
- 1.8 % sugar
- 1 % additional water
- 0.4 % dried herbs (parsley)

The respective granulometries of salt and glutamate were as shown in Example 1.

The production process comprised the following steps:

The 1% additional water was emulsified with the sunflower oil in a fast rotating stirrer.

The emulsion was atomised on a premix of the powdered ingredients in a ploughshare mixer with chopper.

The dried herbs were added in the end.

The hard, beef-type bouillon tablet thus obtained contained only sunflower oil, which is a healthy oil rich in monounsaturated fatty acids and/or polyunsaturated fatty acids, and no fat beside the non fat ingredients.

This tablet had no fat solidification after rehydratation with hot water when it was then getting cold and it also was cold water soluble.

Furthermore this tablet had a fresh and nice appearance due to what may be called a natural polish of its surfaces.

## Claims

1. A hard bouillon and/or seasoning tablet which comprises, in total tablet weight %, from 1 to 20% of an oil and possibly fat, from 4 to 80% of a milled filler, up to 95% of a non milled filler, from 4 to 35%, preferably from 4 to 20% of a stickening or sticking agent, and, in total oil and fat weight %, up to 40% or preferably up to 30%, even more preferably up to 20% or even up to 10%, and still even more preferably up to only 5% or even up to only 1% fat, as well as optionally spices, flavours, dehydrated vegetables, herb leafs and/or plant extracts;
wherein the milled filler is a milled crystalline ingredient having been milled to fine particles having a mean diameter of from 5 to 80 pm; and in which the stickening or sticking agent comprises an ingredient the addition of which (combined with an adequate increase of the Aw value) is capable of imparting a glass transition temperature to the final mixture which may be exceeded during tableting, and which comprises, as stickening or sticking agent, from 10 to 20% maltodextrin having a DE value of from 5 to 60, preferably of from 10 to 60, more preferably of from 20 to 50 and even more preferably of from 10 to 30, and from 0.8 to 1.2% added water;
wherein the total amount of milled filler is up to 80%.

2. A hard bouillon and/or seasoning tablet according to claim 1, in which the oil is a healthy oil selected from a group comprising sunflower oil, olive oil, mais oil and/or canola oil.

3. A hard bouillon and/or seasoning tablet according to claim 1, in which the milled filler is a milled crystalline ingredient, especially a crystalline ingredient selected from a group comprising salt, glutamate and/or sugar.

4. A hard bouillon and/or seasoning tablet according to claim 3, in which the milled crystalline ingredient comprises fine particles having a mean diameter of from 5 to 80 µm and a span of from 2.0 to 5.0.

5. A process for the production of a hard bouillon tablet, which consists of preparing a dry premix of powdered constituents comprising, in total tablet weight %, from 4 to 80% of a milled filler and up to 95% of a non milled filler, atomising, in total tablet weight %, from 1 to 20% of an oil and possibly fat onto the dry premix while further mixing, optionally adding dehydrated vegetables and/or herb leafs, and tableting the final mixture thus obtained, wherein, in total tablet weight %, from 4 to 35%, preferably from 4 to 20% of a stickening or sticking agent and optionally spices, flavours, and/or plant extracts are added to the dry premix or to the mixture of dry premix and oil, and wherein, in total oil and fat weight %, up to 40% or preferably up to 30%, even more preferably up to 20% or even up to 10%, and still even more preferably up to only 5% or even up to only 1% fat are added to the dry premix or to the oil;
wherein the milled filler is a milled crystalline ingredient having been milled to fine particles having a mean diameter of from 5 to 80 pm; and in which the stickening or sticking agent comprises an ingredient the addition of which (combined with an adequate increase of the Aw value) is capable of imparting a glass transition temperature to the final mixture which may be exceeded during tableting, and which comprises, as stickening or sticking agent, from 10 to 20% maltodextrin having a DE value of from 5 to 60, preferably of from 10 to 60, more preferably of from 20 to 50 and even more preferably of from 10 to 30, and from 0.8 to 1.2% added water;
wherein the total amount of milled filler is up to 80%.

6. A process according to claim 5, wherein the premix comprises, as stickening or sticking agent, from 10 to 20% maltodextrin having a DE value of from 10 to 60, preferably from 20 to 50, and from 0.8 to 1.2% of water are added in form of an emulsion in the oil.

## Patentansprüche

1. Harte Brüh- und/oder Würzmitteltablette, die, in % des Tabletten-Gesamtgewichts, von 1 bis 20 % eines Öls und ggf. Fetts, von 4 bis 80 %, eines gemahlenen Füllstoffs, bis zu 95 % eines nicht gemahlenen Füllstoffs, von 4 bis 35 %, vorzugsweise von 4 bis 20 %, eines klebrigmachenden oder klebenden Mittels und, in % des Öl- und Fett-Gesamtgewichts, bis zu 40 % oder vorzugsweise bis zu 30 %, stärker bevorzugt bis zu 20 % oder selbst bis zu 10 %, und noch mehr bevorzugt bis zu nur 5 % oder selbst nur bis zu 1 % Fett, sowie ggf. Gewürze, Aromen, getrocknete Gemüse, Kräuterblätter und/oder Pflanzenextrakte, umfasst;
wobei der gemahlene Füllstoff ein gemahlener kristalliner Bestandteil ist, der zu feinen Teilchen die einen mittleren Durchmesser von 5 bis 80 µm haben gemahlt wurde; und
worin das klebrigmachende oder klebende Mittel einen Bestandteil umfasst, dessen Zugabe (in Kombination mit einer adäquaten Erhöhung des Aw-Wertes) es ermöglicht, der Endmischung eine Glasübergangstemperatur zu verleihen, die während des Tablettierens überschritten werden kann, und die, als klebrigmachendes oder klebendes Mittel, von 10 bis 20 % Maltodextrin mit einem DE-Wert von 5 bis 60, vor- zugsweise von 10 bis 60, stärker bevorzugt von 20 bis 50 und noch stärker bevorzugt von 10 bis 30, sowie von 0,8 bis 1,2 % zugesetzes Wasser umfasst;
wobei die gesamte Menge gemahlener Füllstoff bis zu 80 % ist.

2. Harte Brüh- und/oder Würzmitteltablette nach Anspruch 1, wobei das Öl ein gesundes Öl ist, das aus der Gruppe ausgewählt ist, die Sonnenblumenöl, Olivenöl, Maisöl und/oder Canolaöl umfasst.

3. Harte Brüh- und/oder Würzmitteltablette nach Anspruch 1, wobei der gemahlene Füllstoff ein gemahlener kristalliner Bestandteil ist, insbesondere ein kristalliner Bestandteil, der aus einer Gruppe ausgewählt ist, die Salz, Glutamat und/oder Zucker umfasst.

4. Harte Brüh- und/oder Würzmitteltablette nach Anspruch 3, wobei der gemahlene kristalline Bestandteil feine Teilchen mit einem mittleren Durchmesser von 5 bis 80 µm und einer Spanne von 2,0 bis 5,0 umfasst.

5. Verfahren zur Herstellung einer harten Brühtablette, das besteht in der Herstellung einer trockenen Vormischung aus pulverförmigen Bestandteilen, die, in % des Tabletten-Gesamtgewichts, von 4 bis 80 %, eines gemahlenen Füllstoffs und bis zu 95 % eines nicht gemahlenen Füllstoffs umfasst, im Vernebeln, in % des Tabletten-Gesamtgewichts, von 1 bis 20 % eines Öls sowie ggf. Fetts über die trockene Vormischung unter weiterem Mischen, ggf. unter Zugabe von getrockneten Gemüsen und/oder Kräuterblättern, und im Tablettieren der auf diese Weise erhaltenen Endmischung, wobei, in % des Tabletten-Gesamtgewichts, von 4 bis 35 %, vorzugsweise von 4 bis 20 %, eines klebrigmachenden oder klebenden Mittels sowie ggf. Gewürze, Aromen und/oder Pflanzenextrakte zu der trockenen Vormischung oder der Mischung aus trockener Vormischung und Öl zugegeben werden, und wobei, in % des Öl- und Fett-Gesamtgewichts, bis zu 40 % oder vorzugsweise bis zu 30 %, stärker bevorzugt bis zu 20 % oder selbst bis zu 10 %, und noch stärker bevorzugt bis zu nur 5 % oder selbst bis zu nur 1 % Fett zu der trockenen Vormischung oder dem Öl zugegeben werden;
wobei der gemahlene Füllstoff ein gemahlener kristalliner Bestandteil ist, der zu feinen Teilchen die einen mittleren Durchmesser von 5 bis 80 µm haben gemahlt wurde; und
worin das klebrigmachende oder klebende Mittel einen Bestandteil umfasst, dessen Zugabe (in Kombination mit einer adäquaten Erhöhung des Aw-Wertes) es ermöglicht, der Endmischung eine Glasübergangstemperatur zu verleihen, die während des Tablettierens überschritten werden kann, und die, als klebrigmachendes oder klebendes Mittel, von 10 bis 20 % Maltodextrin mit einem DE-Wert von 5 bis 60, vor- zugsweise von 10 bis 60, stärker bevorzugt von 20 bis 50 und noch stärker bevorzugt von 10 bis 30, sowie von 0,8 bis 1,2 % zugesetzes Wasser umfasst;
wobei die gesamte Menge gemahlener Füllstoff bis zu 80 % ist.

6. Verfahren nach Anspruch 5, wobei die Vormischung als klebrigmachendes oder klebendes Mittel von 10 bis 20 % Maltodextrin mit einem DE-Wert von 10 bis 60, vorzugsweise von 20 bis 50, umfasst und von 0,8 bis 1,2 % Wasser in Form einer Emulsion in dem Öl zugegeben werden.

## Revendications

1. Cube dur de bouillon et/ou d'assaisonnement comprenant, en % en poids du cube total, de 1 à 20 % d'une huile et éventuellement de graisse, de 4 à 80 % d'une charge broyée, jusqu'à 95 % d'une charge non broyée, de 4 à 35 %, de préférence de 4 à 20 % d'un agent d'adhérence ou d'agglutination et, en % en poids total de l'huile et de la graisse, jusqu'à 40 % ou de préférence jusqu'à 30 %, de façon encore plus préférée jusqu'à 20 % ou même jusqu'à 10 %, et de façon encore plus préférée jusqu'à seulement 5 % ou même jusqu'à seulement 1 % de graisse, ainsi qu'éventuellement des épices, des arômes, des légumes déshydratés, des plantes aromatiques et/ou des extraits de plantes;
dans lequel la charge broyée est un ingrédient cristallin broyé ayant été broyé en fines particules ayant un diamètre moyen de 5 à 80 µm; et dans lequel l'agent d'adhérence ou d'agglutination comprend un ingrédient dont l'addition (combinée avec une augmentation adéquate de la valeur Aw) est capable de conférer au mélange final une température de transition vitreuse qui peut être dépassée pendant la transformation en cubes, et qui comprend, comme agent d'adhérence ou d'agglutination, de 10 à 20 % de maltodextrine ayant une valeur DE de 5 à 60, de préférence de 10 à 60, de façon plus préférée de 20 à 50 et de façon encore plus préférée de 10 à 30, et de 0,8 à 1,2 % d'eau ajoutée;
dans lequel la charge broyée totale est jusqu'à 80 %.

2. Cube dur de bouillon et/ou d'assaisonnement selon la revendication 1, dans lequel l'huile est une huile saine choisie dans l'ensemble constitué de l'huile de tournesol, l'huile d'olive, l'huile de maïs et/ou l'huile de colza.

3. Cube dur de bouillon et/ou d'assaisonnement selon la revendication 1, dans lequel la charge broyée est un ingrédient cristallin broyé, en particulier un ingrédient cristallin choisi dans l'ensemble constitué d'un sel, un glutamate et/ou un sucre.

4. Cube dur de bouillon et/ou d'assaisonnement selon la revendication 3, dans lequel l'ingrédient cristallin broyé comprend de fines particules ayant un diamètre moyen de 5 à 80 µm et une fourchette de 2,0 à 5,0.

5. Procédé de préparation d'un cube dur de bouillon, comprenant les étapes consistant à préparer un prémélange sec de constituants en poudre comprenant, en % en poids du cube total, de 4 à 80 % d'une charge broyée et jusqu'à 95 % d'une charge non broyée, à atomiser, en % en poids du cube total, de 1 à 20 % d'une huile et éventuellement de graisse sur le prémélange sec tout en continuant de le mélanger, et éventuellement à ajouter des légumes déshydratés ou des plantes aromatiques, et à transformer en cubes le mélange final ainsi obtenu, dans lequel, en % en poids du cube total, on ajoute de 4 à 35 %, de préférence de 4 à 20 % d'un agent d'adhérence ou d'agglutination et éventuellement des épices, des arômes et/ou des extraits de plantes au prémélange sec ou au mélange du prémélange sec et d'huile, et dans lequel, en % en poids total d'huile et de graisse, on ajoute jusqu'à 40 % ou de préférence jusqu'à 30 %, de façon encore plus préférée jusqu'à 20 % ou même jusqu'à 10 % et de façon encore plus préférée jusqu'à seulement 5 % ou même jusqu'à seulement 1 % de graisse au prémélange sec ou à l'huile;
dans lequel la charge broyée est un ingrédient cristallin broyé ayant été broyé en fines particules ayant un diamètre moyen de 5 à 80 µm; et dans lequel l'agent d'adhérence ou d'agglutination comprend un ingrédient dont l'addition (combinée avec une augmentation adéquate de la valeur Aw) est capable de conférer au mélange final une température de transition vitreuse qui peut être dépassée pendant la transformation en cubes, et qui comprend, comme agent d'adhérence ou d'agglutination, de 10 à 20 % de maltodextrine ayant une valeur DE de 5 à 60, de préférence de 10 à 60, de façon plus préférée de 20 à 50 et de façon encore plus préférée de 10 à 30, et de 0,8 à 1,2 % d'eau ajoutée;
dans lequel la charge broyée totale est jusqu'à 80 %.

6. Procédé selon la revendication 5, dans lequel le prémélange comprend, comme agent d'adhérence ou d'agglutination, de 10 à 20 % de maltodextrine ayant une valeur DE de 10 à 60, de préférence de 20 à 50, et on ajoute de 0,8 à 1.2 % d'eau sous la forme d'une émulsion dans l'huile.
